Europäisches Patentamt

European Patent Office

Office européen des brevets

(19)

(11) Veröffentlichungsnummer: **0 121 601**
**B1**

(12)    **EUROPÄISCHE PATENTSCHRIFT**

(45) Veröffentlichungstag der Patentschrift:
26.11.86

(21) Anmeldenummer: 83112502.6

(22) Anmeldetag: 13.12.83

(51) Int. Cl.⁴: **F 16 D 65/02,** B 61 H 5/00

(54) Bremszange für eine Scheibenbremse.

(30) Priorität: 10.03.83 DE 3308499

(43) Veröffentlichungstag der Anmeldung:
17.10.84 Patentblatt 84/42

(45) Bekanntmachung des Hinweises auf die Patenterteilung:
26.11.86 Patentblatt 86/48

(84) Benannte Vertragsstaaten:
AT BE CH DE FR IT LI SE

(56) Entgegenhaltungen:
DE-A-2 612 802
DE-B-2 449 853
US-A-2 827 986
US-A-3 827 986

(73) Patentinhaber: WABCO Westinghouse
Steuerungstechnik GmbH & Co., Bartweg 13
Postfach 91 12 70, D-3000 Hannover 91 (DE)

(72) Erfinder: Lehnert, Erhard, Theodor- Heuss- Strasse
3, D-3161 Dollbergen (DE)

(74) Vertreter: Schrödter, Manfred, WABCO
Westinghouse Fahrzeugbremsen GmbH Am
Lindener Hafen 21 Postfach 91 12 80, D-3000
Hannover 91 (DE)

EP 0 121 601 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Bremszange für eine Scheibenbremse gemäß dem Oberbegriff des Patentanspruchs 1.

Eine derartige Bremszange ist z.B. aus der DE-A-26 12 802 bekannt. Für die Ausbildung der Lagereinrichtungen für die beiden Bremshebel ist die Forderung von Bedeutung, daß eine möglichst verschleißfreie Lagerung erzielt wird. Um dieses Ziel zu erreichen, könnte man daran denken, die Lagereinrichtungen mit ausreichend vielen Dichtungen zu versehen, die das unerwünschte Eindringen von Schmutz verhindern. Dies bedeutet aber einen relativ großen Aufwand mit der verbleibenden Unsicherheit, daß die erwähnten Dichtungen bei längerem Betrieb zerstört werden können.

Der Erfindung liegt deshalb die Aufgabe zugrunde, eine Bremszange der eingangs genannten Art so auszubilden, daß der Verschleiß der einzelnen Bauteile verringert wird.

Diese Aufgabe wird mit der im Patentanspruch 1 angegebenen Erfindung gelöst. Weiterbildungen und vorteilhafte Ausgestaltungen der Erfindung werden in den Unteransprüchen aufgezeigt.

Die erfindungsgemäße Bremszange bietet insbesondere den Vorteil, mit wenigen relativ zueinander bewegbaren Teilen und somit auch mit wenigen Dichtelementen auszukommen. Die Montage und Demontage der erfindungsgemäßen Bremszange am Fahrzeug ist vereinfacht, da die Lagerungen aus wenigen Einzelteilen bestehen.

Anhand der Zeichnung werden zwei Ausführungsbeispiele der Erfindung nachstehend näher erläutert.

Es zeigen:

Figur 1 eine Seitenansicht eines Bremshebels einer Bremszange, bei welchem das obere Bremshebelteil drehfest mit der Achse des Bremshebels verbunden ist,

Figur 2 die Draufsicht auf die in Figur 1 gezeigte Bremszange und

Figur 3 einen Bremshebel, welcher aus einem oberen Bremshebelteil und einem unteren Bremshebelteil besteht, wobei die die beiden Bremshebelteile verbindende Achse geteilt ausgebildet ist.

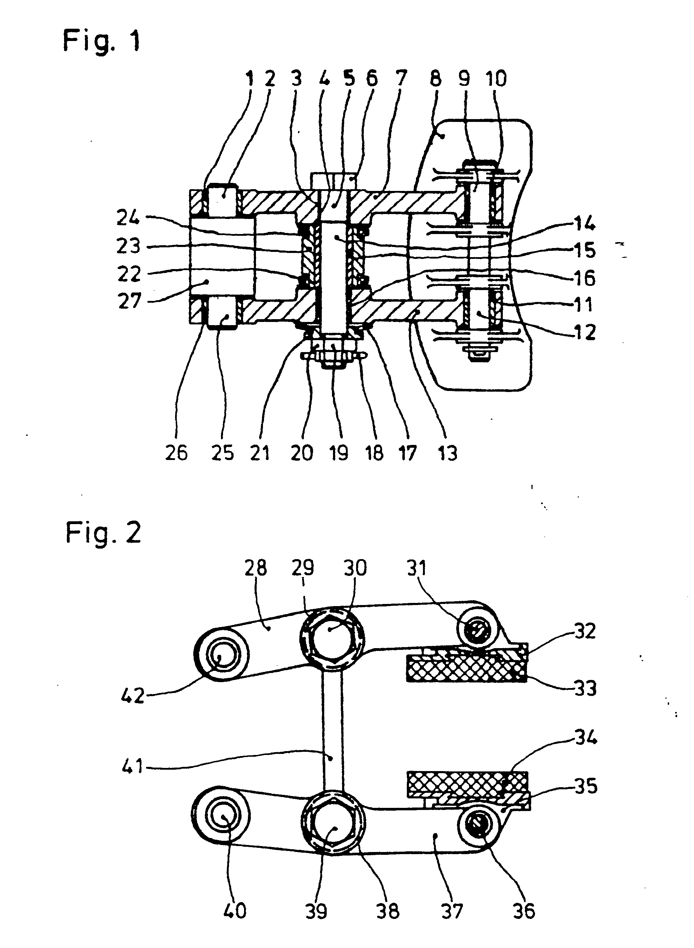

In Figur 1 ist ein Bremshebel einer Bremszange dargestellt, welcher aus einem oberen Bremshebelteil 7 und einem unteren Bremshebelteil 13 besteht. Das obere Bremshebelteil 7 weist eine zwischen seinen beiden freien Enden angeordnete mit Gewinde 4 versehene Bohrung 3 auf, in welche ein als Achse dienender Lagerbolzen 5, 14 eingeschraubt ist. Der Lagerbolzen 5, 14 ist so ausgebildet, daß der dem Kopf 6 des Lagerbolzens 5, 14 zugewandte Endbereich 5, auf welchem das obere Bremshebelteil 7 aufgeschraubt ist, einen größeren Durchmesser aufweist, als der dem oberen Bremshebelteil 7 abgewandte Teil des Lagerbolzens. Der Lagerbolzen 5, 14 für die beiden Bremshebelteile 7, 13 ist drehbar in einem Auge 23 gelagert, welches Bestandteil einer Bremsbrücke ist, die den Bremshebel 7, 13 mit einem hier nicht dargestellten zweiten Bremshebel verbindet. Zwischen dem Lagerbolzen und dem Auge 23 ist eine Buchse 15 vorgesehen. Auf das dem oberen Bremshebelteil 7 abgewandte Ende des Lagerbolzens 5, 14 ist eine Buchse 16 aufgeschoben, auf welcher das untere Bremshebelteil 13 gelagert ist. Das untere Bremshebelteil 13 wird von einer Kronenmutter 20 sowie einem zwischen dem unteren Bremshebelteil 13 und der Kronenmutter 20 angeordneten Distanzring 21 gegen axiale Bewegung gesichert. Ein ringförmiges Federelement 17 liegt mit seinem äußeren Randbereich auf dem unteren Bremshebelteil 13 auf und stützt sich mit seinem inneren Randbereich an einem Vorsprung des Distanzringes 21 ab. Mittels eines Splintes 18 ist die Kronenmutter 20 auf dem Lagerbolzen 5, 14 gegen unbeabsichtigtes Lösen gesichert. Das als Lager für den Lagerbolzen 5, 14 dienende Auge 23 weist sowohl auf seiner dem oberen Bremshebelteil 7 zugewandten Seite als auch auf seiner dem unteren Bremshebelteil 13 zugewandten Seite eine umlaufende Ausnehmung auf, in welcher ein Profildichtring 22 bzw. 24 gelagert ist. Der Profildichtring 24 liegt dichtend an der dem Auge 23 zugewandten Fläche des oberen Bremshebelteiles 7 an und der Profildichtring 22 liegt dichtend an der dem Auge 23 zugewandte Fläche des unteren Bremshebelteils 13 an.

Die gemäß der Zeichnung links liegenden Enden der beiden Bremshebelteile 7, 13 weisen mit Buchsen 26, 1 versehene Bohrungen auf, in welchen die Lagerzapfen 25, 2 einer Antriebseinrichtung 27 für die Bremszange gelagert sind. Die rechts liegenden Enden der beiden Bremshebelteile 7, 13 besitzen mit Buchsen 10, 11 versehene Bohrungen, in welchen die Lagerzapfen 9, 12 eines Bremsbelagträgers 8 gelagert sind.

In Figur 2 ist die Draufsicht auf die in Figur 1 gezeigte Bremszange dargestellt, welche im wesentlichen aus einem ersten Bremshebel 28, einem zweiten Bremshebel 37 sowie einer die beiden Bremshebel 28, 37 miteinander verbindenden Bremsbrücke 41 besteht. Der erste Bremshebel 28 besteht aus einem oberen Bremshebelteil und einem paralel zu diesem angeordneten Bremshebelteil. Des gleichen setzt sich der zweite Bremshebel 37 aus einem oberen Bremshebelteil und einem unteren Bremshebelteil zusammen. Die beiden Bremshebelteile des ersten Bremshebels 28 sind mittels eines Lagerbolzens 30 miteinander verbunden. In gleicher Weise sind das obere Bremshebelteil und das untere Bremshebelteil des zweiten Bremshebels 37 mittels eines Lagerbolzens 39 miteinander verbunden. Die Bremsbrücke 41 weist an ihren beiden einander gegenüberliegenden Enden je ein Auge 29 bzw. 38 auf, welches als Lager für die mit dem Bremshebel 28 bzw. 37 verbundenen Lagerbolzen 30 bzw. 39 dient. Mittels Sicherungsmuttern, welche auf die die unteren Bremshebelteile tragenden Enden der Lagerbolzen 30 bzw. 39 aufgeschraubt sind, werden die Lagerbolzen in axialer Richtung fixiert.

Im Gegensatz zu den oberen Bremshebelteilen sind die unteren Bremshebelteile relativ zu ihren Lagerbolzen 30 bzw. 39 verdrehbar angeordnet. Jeder der beiden Bremshebel 28 bzw. 37 trägt an seinem einen Ende einen mit einem Bremsbelag 33 bzw. 34 versehenen Bremsbelaghalter 32 bzw. 35. Der Bremsbelaghalter 32 ist auf einem Lagerbolzen 31 des ersten Bremshebels 28 und der Bremsbelaghalter 35 ist auf einem Lagerbolzen 36 des zweiten Bremshebels 37 verschwenkbar gelagert.

Die die Bremsbelaghalter 32 und 35 tragenden Enden der Bremshebel 28, 37 sind mittels einer nicht dargestellten Betätigungseinrichtung aufeinander zu bzw. voneinander weg bewegbar. Die Betätigungseinrichtung ist mit Lagerstellen 40, 42 verbunden, die an den Enden der Bremshebel 28, 37 angeordnet sind, welche den die Bremsbelaghalter tragenden Enden der Bremshebel 28, 37 gegenüberliegen.

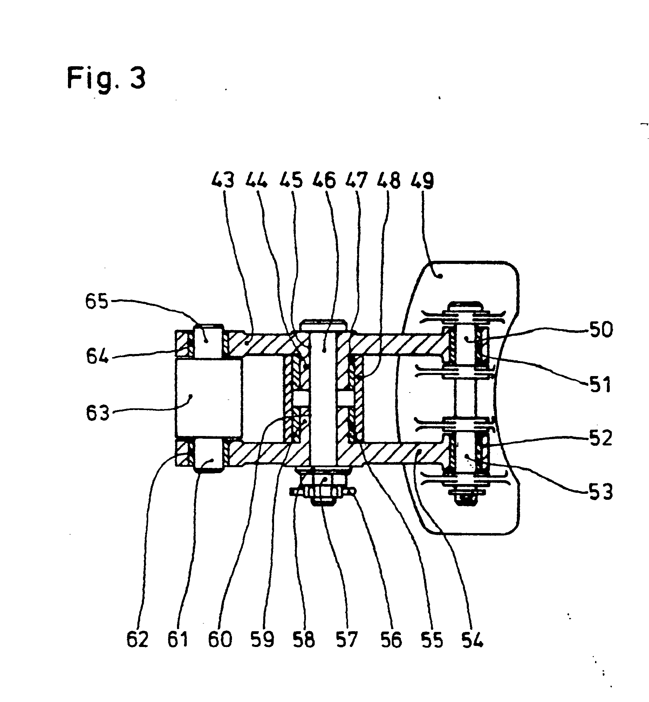

Figur 3 zeigt einen Bremshebel, der aus einem oberen Bremshebelteil 43 und einem unteren Bremshebelteil 54 besteht. Das obere Bremshebelteil 43 weist eine als Achsstummel 44 ausgebildete Anformung aus, welche in einem Lagerauge 48 einer Bremsbrücke drehbar gelagert ist. Mittels der Bremsbrücke ist der in der Abbildung gezeigte Bremshebel 43, 54 mit einem nicht dargestellten weiteren Bremshebel verbunden. Die beiden Bremshebel bilden zusammen mit der Bremsbrücke eine Bremszange. Das untere Bremshebelteil 54 weist ebenfalls eine als Achsstummel 59 ausgebildete Anformung auf, welche dem oberen Bremshebelteil 43 gegenüber in dem Lagerauge 48 drehbar gelagert ist. Zwischen dem Achsstummel 44 des oberen Bremshebelteiles 43 und dem Lagerauge 48 ist eine Buchse 47 vorgesehen. Des gleichen ist zwischen dem unteren Achsstummel 59 und dem Lagerauge 48 eine Buchse 55 angeordnet. Die Achsstummel 44 und 59 haben die Funktion eines Lagerbolzens für die Bremshebelteile.

Der Achsstummel 44 des oberen Bremshebelteiles 43 weist eine in Richtung seiner Längsachse verlaufende Bohrung 45 auf. Des gleichen weist der Achsstummel 59 des unteren Bremshebelteils 54 eine in Richtung seiner Längsachse verlaufende Bohrung 60 auf. Mittels eines Gewindebolzens 46, welcher an seinem unteren Ende Gewinde trägt, sind die beiden Bremshebelteile 43, 54 miteinander verspannt, so daß zwischen dem Gewindebolzen 46 und den beiden Bremshebelteilen 43, 54 keine Relativbewegung stattfinden kann. Das Verspannen erfolgt mittels einer auf das mit Gewinde versehene Ende des Lagerbolzens 46 aufgeschraubten Kronenmutter 57, welche mittels eines Sicherungsstiftes 56 gegen unbeabsichtigtes Lösen gesichert ist. Zwischen der Kronenmutter 57 und dem unteren Bremshebelteil ist eine Ringscheibe 58 angeordnet.

Die beiden in der Zeichnung links liegenden Enden der Bremshebelteile 43, 54 weisen Lagerstellen 62, 64 zur Aufnahme der Lagerbolzen 61, 65 einer Antriebseinrichtung 63 für die Bremszange auf. An den beiden in der Zeichnung rechts liegenden Enden der Bremshebelteile 43, 54 ist in Lagerstellen 50, 51, 52, 53 ein Bremsbelagträger 49 gelagert.

## Patentansprüche

1. Bremszange für eine Scheibenbremse mit folgenden Merkmalen:

a) es sind ein erster Bremshebel (7) und ein zweiter Bremshebel (13) vorgesehen, die je in einer Lagereinrichtung (5, 14, 15, 23) drehbar gelagert sind;

b) die beiden Bremshebel (7, 13) weisen an ihrem einen Ende wenigstens je einen Bremsbelagträger (32, 35) auf;

c) die mit den Bremsbelagträgern (32, 35) versehenen Enden der Bremshebel (7, 13) schließen zangenartig eine Bremsscheibe ein;

d) es ist eine Betätigungseinrichtung vorgesehen, die mit den beiden Bremshebeln (7, 13) verbunden und derart angeordnet ist, daß die mit den Bremsbelagträgern (32, 35) versehenen Enden der Bremshebel aufeinander zu bzw. voneinander weg bewegbar sind;

dadurch gekennzeichnet, daß die Lagereinrichtungen für die Bremshebel (7, 13) aus je einem jeweils einstückig oder wenigstens drehfest mit dem Bremshebel verbundenen Lagerbolzen (5, 14) und einem den Lagerbolzen aufnehmenden Lager (15, 23) bestehen.

2. Bremszange nach Anspruch 1, gekennzeichnet durch die folgenden Merkmale:

a) der erste Bremshebel besteht aus einem oberen Bremshebelteil (7) und einem unteren Bremshebelteil (13);

b) der zweite Bremshebel besteht aus einem oberen Bremshebelteil und einem unteren Bremshebelteil;

c) das obere Bremshebelteil (7) und das untere Bremshebelteil (13) sind über einen Lagerbolzen (5,14) miteinander verbunden;

d) wenigstens eines der beiden Bremshebelteile (7,13) ist drehfest mit dem Lagerbolzen (5,14) verbunden.

3. Bremszange nach wenigsten einem der vorhergehenden Ansprüche, gekennzeichnet durch die folgenden Merkmale:

a) das obere Bremshebelteil und der Lagerbolzen sind einstückig ausgebildet;

b) das untere Bremshebelteil ist mit dem Teil des Lagerbolzens, welches dem oberen Bremshebelteil abgewandt ist, drehbar verbunden.

4. Bremszange nach wenigstens einem der vorhergehenden Ansprüche, dadurch gekennzeichnet, daß das untere Bremshebelteil mit dem Teil des Lagerbolzens, welches dem oberen Bremshebelteil abgewandt ist, drehfest verbunden ist.

5. Bremszange nach wenigstens einem der vorhergehenden Ansprüche, gekennzeichnet durch die folgenden Merkmale:

a) der Lagerbolzen ist geteilt ausgebildet;

b) das obere Bremshebelteil (43) und ein als Achsstummel (44) ausgebildetes erstes Teilstück des Lagerbolzene sind einstückig ausgebildet;

c) das untere Bremshebelteil (54) und ein als Achsstummel (59) ausgebildetes zweites Teilstück des Lagerbolzens sind einstückig ausgebildet;

d) es sind Mittel zur drehfesten Verbindung der beiden Teilstücke (44,59) des Lagerbolzens miteinander vorgesehen.

6. Bremszange nach Anspruch 5, gekennzeichnet durch die folgenden Merkmale:

a) das obere Bremshebelteil (43) und das mit dem oberen Bremshebelteil (43) verbundene erste Teilstück (44) des Lagerbolzens weisen eine in Richtung der Längsachse des Teilstückes (44) des Lagerbolzens verlaufende Ausnehmung (45) auf;

b) das untere Bremshebelteil (54) und das mit dem unteren Bremshebelteil (54) verbundene Teilstück (59) des Lagerbolzens weisen eine in Richtung der Längsachse des Teilstückes (59) des Lagerbolzens verlaufende Ausnehmung (60) auf;

c) das obere Bremshebelteil (43) und das untere Bremshebelteil (54) sind mittels eines Gewindebolzens (56) und einer auf das eine Ende des Gewindebolzens (46) aufgeschraubte Mutter (57) miteinander verspannt, derart daß keine Relativbewegung zwischen dem Gewindebolzen (46) und den beiden Bremshebelteilen (43,54) stattfindet.

7. Bremszange nach wenigstens einem der vorhergehenden Ansprüche dadurch gekennzeichnet, daß der Lagerbolzen in einem Lagerauge (48) gelagert ist.

8. Bremszange nach wenigstens einem der vorhergehenden Ansprüche, dadurch gekennzeichnet, daß das Lagerauge (48) zwischen dem oberen Bremshebelteil (43) und dem unteren Bremshebelteil (54) angeordnet ist.

9. Bremszange nach wenigstens einem der vorhergehenden Ansprüche, dadurch gekennzeichnet, das die beiden Bremshebel (28,37) der Bremszange über eine Bremsbrücke (41,29,38) miteinander verbunden sind.

10. Bremszange nach wenigstens einem der vorhergehenden Ansprüche, dadurch gekennzeichnet, daß die Bremsbrücke (41,29,38) an ihren beiden einander gegenüberliegenden Enden die Lageraugen (29,38) trägt, welche als Lager für die Lagerbolzen (30,39) der Bremshebel (28,37) dienen.

11. Bremszange nach wenigstens einem der vorhergehenden Ansprüche, dadurch gekennzeichnet, daß die Lager für die Lagerbolzen der beiden Lagereinrichtungen auf einer beide Bremshebel tragenden Bremsbrücke angeordnet sind.

**Claims**

1. Brake caliper for a disc brake having the following features:

a) a first brake lever (7) and a second brake lever (13) are provided, each of which is rotatably mounted in a bearing device (5, 14, 15, 23);

b) each of the two brake levers (7, 13) has at least one brake-lining support (32, 35) at one end;

c) the ends of the brake levers (7, 13) provided with the brake-lining supports (32, 35) sandwich a brake disc in the manner of tongs;

d) an actuating device is provided which is connected to the two brake levers (7, 13) and is arranged in such a manner that the ends of the brake levers provided with the brake-lining supports (32, 35) can be moved towards each other or apart;

characterised in that the bearing devices for the brake levers (7, 13) consist of a bearing bolt (5, 14) which is made in one piece with the brake lever or is at least rotationally connected thereto and a bearing (15, 23) that accommodates the bearing bolt.

2. Brake caliper according to claim 1, characterised by the following features:

a) the first brake lever consists of an upper brake-lever part (7) and a lower brake-lever part (13);

b) the second brake lever consists of an upper brake-lever part and a lower brake-lever part;

c) the upper brake-lever part (7) and the lower brake-lever part (13) are connected to one another by a bearing bolt (5, 14);

d) at least one of the two brake-lever parts (7, 13) is rotationally connected to the bearing bolt (5, 14).

3. Brake caliper according to at least one of the preceding claims, characterised by the following features:

a) the upper brake-lever part and the bearing bolt are constructed in one piece;

b) the lower brake-lever part is rotationally connected to the part of the bearing bolt that is remote from the upper brake-lever part.

4. Brake caliper according to at least one of the preceding claims, characterised in that the lower brake-lever part is rotationally connected to the part of the bearing bolt that is remote from the upper brake-lever part.

5. Brake caliper according to at least one of the preceding claims, characterised by the following features:

a) the bearing bolt is of divided construction;

b) the upper brake-lever part (43) and a first part of the bearing bolt which is designed as an axle journal (44) are constructed in one piece;

c) the lower brake-lever part (54) and a second part of the bearing bolt which is designed as an axle journal (59) are constructed in one piece;

d) means are provided for rotationally connecting the two parts (44, 59) of the bearing bolt to one another.

6. Brake caliper according to claim 5, characterised by the following features:

a) the upper brake-lever part (43) and the first part (44) of the bearing bolt which is connected to the upper brake-lever part (43) have a hole (45) extending in the direction of the longitudinal axis of the part (44) of the bearing bolt;

b) the lower brake-lever part (54) and the part (59) of the bearing bolt which is connected to the lower brakelever part (54) have a hole (60) extending in the direction of the longitudinal axis of the part (59) of the bearing bolt;

c) the upper brake-lever part (43) and the lower brake-lever part (54) are clamped together by means of a threaded bolt (46) and a nut (57) screwed onto one end of the threaded bolt (46) in such a manner that no relative movement takes place between the threaded bolt (46) and the two parts of the brake lever (43, 54).

7. Brake caliper according to at least one of the preceding claims, characterised in that the bearing bolt is mounted in a bearing eye (48).

8. Brake caliper according to at least one of the preceding claims, characterised in that the bearing eye (48) is arranged between the upper brake-lever part (43) and the lower brake-lever part (54).

9. Brake caliper according to at least one of the preceding claims, characterised in that the two brake levers (28, 37) of the brake caliper are connected to one another by a brake bridge (41, 29, 38).

10. Brake caliper according to at least one of the preceding claims, characterised in that the brake bridge (41, 29, 38) carries the bearing eyes (29, 38) at its two ends opposing one another, which eyes serve as bearings for the bearing bolts (30, 39) of the brake levers (28, 37).

11. Brake caliper according to at least one of the preceding claims, characterised in that the bearings for the bearing bolts of the two bearing devices are arranged on a brake bridge that carries the two brake levers.

**Revendications**

1. Etrier de frein à disque présentant les caractéristiques suivantes:

a) il est prévu un premier levier de frein (7) et un second levier de frein (13) qui peuvent tourillonner respectivement dans un dispositif formant portée (5, 14, 15, 23).

b) les deux leviers de frein (7, 13) présentent à l'une de leurs extrémités au moins respectivement un porte-garniture de frein (32, 35).

c) les extrémités des leviers de frein (7, 13) munies des porte-garnitures de frein (32, 35) enserrent, à la façon d'une pince, un disque de frein.

d) il est prévu un dispositif de manoeuvre qui est relié aux deux leviers de frein (7, 13) et qui est disposé de façon que les extrémités des leviers de frein munies des porte-garnitures de frein (32, 35) puissent se rapprocher l'une vers l'autre et s'écarter l'une de l'autre.

caractérisé en ce que les dispositifs formant portée pour les leviers de frein (7, 13) sont respectivement constitués d'un tourillon (5,14) réuni chaque fois d'une pièce, ou tout au moins relié sans possibilité de rotation relative, avec le levier de frein et d'une portée (5, 23) qui reçoit le tourillon.

2. Etrier de frein selon la revendication 1, caractérisé par les attributs suivants:

a) Le premier levier de frein est constitué d'une partie supérieure de levier de frein (7) et d'une partie inférieure de levier de frein (13).

b) le second levier de frein est constitué d'une partie supérieure de levier de frein d'une partie inférieure de levier de frein.

c) la partie supérieure de levier de frein (7) et la partie inférieure de levier de frein (13) sont reliées l'une à l'autre par l'intermédiaire d'un tourillon (5, 14).

d) au moins l'une des deux parties (7, 13) de levier de frein est reliée, sans possibilité de rotation relative, au tourillon (5, 14).

3. Etrier de frein selon au moins l'une des revendications précédentes, caractérisé par les attributs suivants:

a) la partie supérieure de levier de frein et le tourillon sont conçus d'une seule piece.

b) la partie inférieure de levier de frein est reliée, avec possibilité de rotation relative à la partie du tourillon qui est du côté opposé à la partie supérieure de levier de frein.

4. Etrier selon au moins l'une des revendications précédentes, caractérisé en ce que la partie inférieure de levier de frein est reliée, sans possibilité de rotation relative, à la partie du tourillon qui est du côté opposé à la partie supérieure de levier de frein.

5. Etrier de frein selon au moins l'une des revendications précédentes, caractérisé par les attributs suivants :

a) le tourillon est conçu en plusieurs parties.

b) la partie supérieure de levier de frein (43) et une première partie, conçue sous forme de portion d'axe (44), du tourillon sont conçues d'une seule pièce.

c) la partie inférieure (54) de levier de frein et une seconde partie, conçue sous forme de portion d'axe (59), du tourillon sont conçues d'une seule pièce.

d) il est prévu un moyen pour relier, sans possibilité de rotation relative, les deux parties (44, 59) du tourillon.

6. Etrier de frein selon la revendication 5, caractérisé par les attributs suivants :

a) la partie supérieure (43) de levier de frein et la première partie (44), reliée à la partie supérieure (43) de levier de frein, du tourillon présentent un évidement (45) qui court dans la direction de l'axe longitudinal de la partie (44) du tourillon.

b) la partie inférieure (54) de levier de frein et la partie (59), reliée à la partie inférieure (54) de levier de frein, du tourillon présentent un évidement (60) qui court dans la direction de l'axe longitudinal de la partie (59) du tourillon.

c) la partie supérieure (43) de levier de frein et la partie inférieure (54) de levier de frein sont bridées l'une avec l'autre, au moyen d'une tige filetée (46) et d'un écrou (57) vissé sur l'une des extrémités de la tige filetée (46) de façon telle qu'il ne se produit aucun mouvement relatif entre la tige filetée (46) et les deux parties (43, 54) de levier de frein.

7. Etrier de frein selon au moins l'une des revendications précédentes, caractérisé en ce que le tourillon porte dans une lumière formant portée (48).

8. Etrier de frein selon au moins l'une des revendications précédentes, caractérisé en ce que la lumière formant portée (48) est disposée entre la partie supérieure (43) de levier de frein et la partie inférieure (54) de levier de frein.

9. Etrier de frein selon au moins l'une des revendications précédentes, caractérisé en ce que les deux leviers de frein (28, 37) de l'étrier de frein sont réunis l'un à l'autre par l'intermediaire d'un pont (41, 29, 38).

10. Etrier de frein selon au moins l'une des revendications précédentes, caractérisé en ce que le pont (41, 29, 38) porte à ses deux extrémités opposées l'une à l'autre les lumières (29, 38) qui servent de portée pour les tourillons (30, 39) des leviers de frein (28, 37).

11. Etrier de frein selon au moins l'une des revendications précédentes, caractérisé en ce que les portées pour les tourillons des deux dispositifs formant portée sont disposées sur un pont qui porte les deux leviers de frein.

Fig. 1

1 2 3 4 5 6 7 8 9 10

24
23
22
27

14
15
16
11
12

26 25 21 20 19 18 17 13

Fig. 2

28 29 30 31

42

32
33

41

34
35

40 39 38 37 36

# Fig. 3

43 44 45 46 47 48 49

65

64

63

50

51

52

53

62 61 60 59 58 57 56 55 54